# EUROPÄISCHE PATENTANMELDUNG

(11) **EP 0 527 256 A1**
(43) Veröffentlichungstag der Anmeldung: **17.02.1993**
(21) Anmeldenummer: 91113604.2
(22) Anmeldetag: 13.08.1991
(51) Int. Cl.: B60R 16/02

(54) **Anordnung der elektrischen Sicherungen für elektronische Steuerungseinheiten in einem KFZ**

(71) Anmelder: SIEMENS AKTIENGESELLSCHAFT, D-80333 München (DE)
(72) Erfinder: Glehr, Manfred, Dipl.-Ing., A-8330 Eppenfelden (AT)

(57) **Zusammenfassung**

Anordnung der elektrischen Sicherungen für mehrere, räumlich verteilte elektronische Steuerungseinheiten in einem KFZ in dezentraler Weise, nämlich in oder an den Gehäusen der ihnen individuell zugeordneten Steuerungseinheiten (A, R, M, G/V) und / oder in Steckern (D), welche solchen Gehäusen (E) zugeordnet sind.

## Beschreibung

Die Erfindung geht von dem im Oberbegriff des Patentanspruches 1 definierten Gegenstand aus, der für sich dem Fachmann und sogar vielen Laien vertraut ist. I.allg. sind jene Sicherungen seitlich im Motorraum unter der Motorhaube angebracht, wobei dieser zentrale "Sicherungskasten", vgl. S in der Figur, oft zusätzlich Relais, also elektrisch gesteuerte Schalter enthält, die ebenfalls solchen dezentral verteilten Steuerungseinheiten zugeordnet sind.

Ein Hauptproblem solcher Anordnungen ist der hohe Aufwand für die Herstellung und anschließend für die Verlegung der komplizierten Kabelbäume. Außerdem hat der betreffende Kabelbaum oft ein unangenehm hohes Gewicht, weil er oft auch recht dicke Leitungen und entsprechend viele solide Stecker aufweisen muß, wenn die betreffenden Steuerungseinheiten zuverlässig hohe Ströme schalten und / oder zeitweise mit hohen Strömen versorgt werden müssen. Dieser Aufwand für die Herstellung, die Verlegung und das Gewicht bzw. die Materialmenge wird umso höher, je mehr elektronische Steuerungseinheiten dezentral über das KFZ verteilt vorhanden sind.

Die Aufgabe,
- den Aufwand für den Kabelbaum zu verringern,
wird erfindungsgemäß durch den im Patentanspruch 1 definierten Gegenstand gelöst.

Die im Patentanspruch 2 definierten zusätzlichen Maßnahmen gestatten, zusätzlich den Aufwand für den Kabelbaum zu verringern, falls solche Relais angebracht sind.

Die Erfindung und Weiterbildungen derselben werden anhand der in den beiden Figuren gezeigten Schemen von Ausführungsbeispielen der Erfindung weiter erläutert. Dabei zeigt die Figur
- 1: die Draufsicht auf ein erfindungsgemäß ausgestattetes KFZ, und
- 2: einen in das Gehäuse einer Steuerungseinheit gesteckten Stecker des Kabelbaumes, wobei dieser Stecker eine Sicherung sowie ein Relais mitenthält, wobei diese Sicherung und dieses Relais der in diesem Gehäuse angebrachten Steuerungseinheit hinsichtlich ihrer elektrischen Funktionen zugeordnet sind.

Die in den Figuren gezeigten Details wurden der Übersichtlichkeit wegen möglichst einfach dargestellt. Zusätzlich wurden Details der räumlichen Anordnung des Kabelbaumes im KFZ weggelassen, weil sich der Fachmann bereits ohnehin aufgrund der vorliegenden Beschreibung durch Worte vorstellen kann, wie bei der Erfindung der Kabelbaum beispielhaft jeweils im Detail im KFZ räumlich verlegt werden kann, um die verschiedenen Steuerungseinheiten mit Strom und nach Bedarf auch mit Signalen zu versorgen.

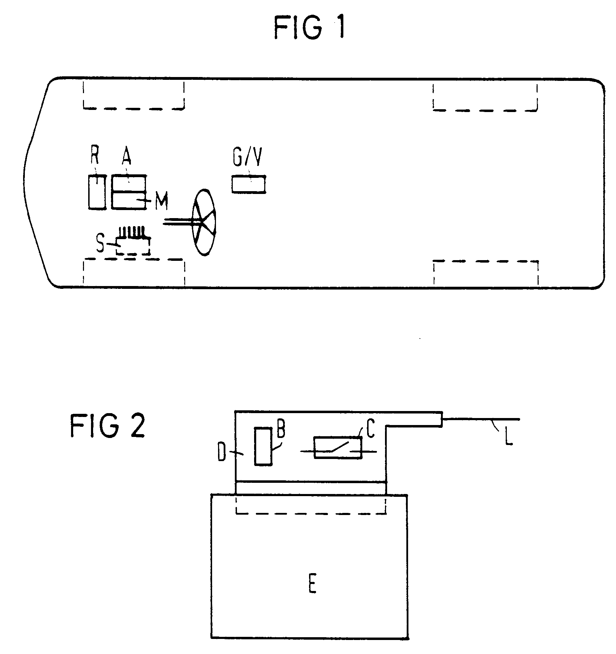

Das in der Figur 1 gezeigte KFZ-Beispiel enthält mehrere dezentrale, nämlich räumlich über das KFZ verteilte elektronische Steuerungseinheiten,
- nämlich eine Steuerungseinheit A eines ABS,
- eine Steuerungseinheit R für die Gemischregelung,
- eine Steuerungseinheit M für die Zündwinkelregelung, und
- eine Steuerungseinheit G für die Getriebesteuerung,
wobei die letzere im selben Gehäuse G/V zusätzlich eine Steuerungseinheit V für die Zweirad-Vierrad-Umsteuerung enthält. Das KFZ kann an sich noch eine ganze Reihe anderer solcher Steuerungseinheit enthalten, oder überhaupt ganz andere, räumlich verteilte Steuerungseinheiten enthalten; - zur Erläuterung der Erfindung genügt es aber, beispielhaft nur auf die gezeigte Anordnung einzugehen.

Bei der Erfindung ist die räumliche Anordnung der elektrischen Sicherungen, z.B. Schmelzsicherungen, anders als beim Stand der Technik. Bei der Erfindung werden die elektrischen Sicherungen der gezeigten Steuerungseinheiten A, R, M, G/V, also z.B. deren Schmelzsicherungen, nicht in dem zentralen Sicherungskasten S angebracht. Statt dessen sind diese Sicherungen dezentral, nämlich jeweils unmittelbar in den Gehäusen - und / oder in einem Sicherungshalter an den oder bei den Gehäusen - der ihnen individuell zugeordneten Steuerungseinheiten A, R, M, G/V angebracht; diese Sicherungen, vgl. die Sicherung B in der Figur 2, können aber auch dezentral in oder an jenen Steckern D angebracht sein, welche jeweils den Gehäusen E jener dezentralen Steuerungseinheiten A, R, M, G/V zugeordnet sind und Leitungen L des Kabelbaumes mit der im Gehäuse E jeweils angebrachten Steuerungseinheit A, R, M bzw. G/V verbinden. Das in der Figur 2 gezeigte einzige Gehäuse E steht also symbolisch für die verschiedenen Gehäuse der Steuerungseinheiten A, R, M und G/V.

Bei der Erfindung kann daher jener Aufwand für den Kabelbaum entfallen, der für räumliche Umwege nötig wäre, wenn die betreffenden Sicherungen zentral in dem Sicherungskasten S angebracht wären. Es werden nämlich nicht nur viele Kabelbaumleitungen kürzer. Oft kann auch ein Teil der Stecker des Kabelbaumes entfallen, nämlich jene Stecker, die sonst am zentralen Sicherungskasten S anzuschließen wären. Überdies können oft dünnere Leitungen für den Kabelbaum benutzt werden, bzw. die Längen gerade auch von dicken Leitungen verringert werden, wobei dünnere Leitungen auch nur kleinere Stecker erfordern. Wenn zwei verschiedene - oder noch mehr - Steuerungseinheiten in einem gemeinsamen Gehäuse E angebracht sind, vgl. die beiden Steuerungseinheiten G/V, dann kann im Prinzip sogar für alle diese Steuerungseinheiten gemeinsam eine einzige Sicherung in oder an diesem Gehäuse E oder im oder am betreffenden Stecker D für dieses Gehäuse E angebracht werden. Auch wenn bei der Erfindung vielleicht die Anzahl der Sicherungen im Vergleich zum Stand der Technik erhöht werden muß, ja selbst falls im Einzelfall bei der Erfindung die Anzahl der Batteriezuleitungen erhöht werden muß, überwiegen jedenfalls häufig die genannten Vorteile der Erfindung deutlich.

Die Erfindung ist also besonders vorteilhaft, wenn im KFZ die verschiedenen elektronischen Steuerungseinheiten in viele räumlich dezentral verteilte Module aufgeteilt sind. Dabei ist die Erfindung besonders an die Anforderungen der Herstellung von KFZ in Großserien angepaßt.

Wenn im KFZ auch Relais angebracht werden, die solchen Steuerungseinheiten jeweils individuell zugeordnet sind - als Beispiel sei ein Relais zur Unterbrechung der Benzinzufuhr zum Motor im Schubbetrieb des KFZ genannt, dann können auch solche Relais in oder an den Gehäusen E der betreffenden Steuerungseinheiten, oder auch, vgl. das Relais C in der Figur 2, im oder am Stecker D für dieses Gehäuse E, angebracht werden, statt daß diese Relais zentral in einem eigenen Relaiskasten, vgl. S, oder zusammen mit den Sicherungen im zentralen Sicherungskasten S, angebracht werden. Dadurch kann man auch hinsichtlich der Relais zusätzlich den Aufwand für den Kabelbaum verringern.

## Patentansprüche

1. Anordnung der elektrischen Sicherungen
- z.B. Schmelzsicherungen -
für mehrere dezentrale, also räumlich verteilte elektronische Steuerungseinheiten
- z.B. für die elektronischen Steuerungseinheiten eines ABS (A), einer Gemischregelung (R), einer Zündwinkelregelung (M), einer Getriebesteuerung (G) und / oder einer Zweirad-Vierrad-Umsteuerung (V) -
in einem KFZ,
**dadurch gekennzeichnet,** daß
- auch die Sicherungen (B) dezentral, nämlich in oder an den Gehäusen (E) der ihnen individuell zugeordneten Steuerungseinheiten (A, R, M, G/V) und / oder in oder an Steckern (D), welche solchen Gehäusen (E) zugeordnet sind, angebracht sind.

2. Anordnung nach Patentanspruch 1,
**dadurch gekennzeichnet,** daß
- auch Relais, die solchen Steuerungseinheiten individuell zugeordnet sind, dezentral, nämlich auch in oder an den Gehäusen (E) der betreffenden Steuerungseinheiten und / oder in oder an Steckern (D), welche solchen Gehäusen (E) zugeordnet sind, angebracht sind.
